(19) Europäisches Patentamt / European Patent Office / Office européen des brevets

(11) **EP 3 994 537 B1**

(12) **EUROPEAN PATENT SPECIFICATION**

(45) Date of publication and mention
of the grant of the patent:
**12.03.2025 Bulletin 2025/11**

(21) Application number: **19938153.4**

(22) Date of filing: **19.07.2019**

(51) International Patent Classification (IPC):
**G05D 1/00** (2024.01)     **G01C 21/20** (2006.01)

(52) Cooperative Patent Classification (CPC):
**G05D 1/0274; G01C 21/206; G05D 1/0217**

(86) International application number:
**PCT/CN2019/096909**

(87) International publication number:
**WO 2021/012125 (28.01.2021 Gazette 2021/04)**

(54) **GLOBAL PATH PLANNING USING PIECEWISE SIGMOID CURVES**

GLOBALE BAHNPLANUNG UNTER VERWENDUNG VON STÜCKWEISE SIGMOID-KURVEN

PLANIFICATION DE TRAJET GLOBAL À L'AIDE DE COURBES SIGMOÏDES PAR MORCEAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**11.05.2022 Bulletin 2022/19**

(73) Proprietor: **Huawei Technologies Co., Ltd.**
**Longgang District**
**Shenzhen,**
**Guangdong 518129 (CN)**

(72) Inventors:
• **NEESCHAL, Chand Aneesh**
**Yokohama, Kanagawa 221--0056 (JP)**
• **YUAN, Kebin**
**Shenzhen, Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
CN-A- 105 955 280    CN-A- 108 253 984
CN-A- 109 227 549    US-A1- 2014 100 693
US-B1- 9 804 603

• COLE KENAN ET AL: "Reactive Trajectory Generation for Multiple Vehicles in Unknown Environments With Wind Disturbances", IEEE TRANSACTIONS ON ROBOTICS, IEEE SERVICE CENTER, PISCATAWAY, NJ, US, vol. 34, no. 5, 1 October 2018 (2018-10-01), pages 1333 - 1348, XP011690922, ISSN: 1552-3098, [retrieved on 20181001], DOI: 10.1109/TRO.2018.2858236
• MARTINEZ-ALFARO H ET AL: "Collision-free path planning for mobile robots and/or AGVs using simulated annealing", SYSTEMS, MAN, AND CYBERNETICS, 1994. HUMANS, INFORMATION AND TECHNOLOG Y., 1994 IEEE INTERNATIONAL CONFERENCE ON SAN ANTONIO, TX, USA 2-5 OCT. 1994, NEW YORK, NY, USA,IEEE, vol. 1, 2 October 1994 (1994-10-02), pages 270 - 275, XP010138896, ISBN: 978-0-7803-2129-8, DOI: 10.1109/ICSMC.1994.399849
• RAIRAN JOSE DANILO: "Robot Path Optimization Based on a Reference Model and Sigmoid Functions", vol. 12, no. 3, 1 January 2015 (2015-01-01), CR, pages 19, XP093121376, ISSN: 1729-8814, Retrieved from the Internet <URL:http://journals.sagepub.com/doi/full-xml/10.5772/60063> [retrieved on 20240118], DOI: 10.5772/60063

EP 3 994 537 B1

- **UPADHYAY, SAURABH ET AL.: "Continuous-Curvature Path Planning With Obstacle Avoidance Using Four Parameter Logistic Curves", IEEE ROBOTICS AND AUTOMATION LETTERS, vol. 1, no. 2, 31 July 2016 (2016-07-31), pages 609 - 616, XP011602394, DOI: 20200401174600Y**

## Description

### BACKGROUND

**Field of the Invention**

The field of the invention relates to robot motion and a global path plan for a robot.

**Background of Related Art**

ROS navigation stack is a powerful tool for mobile robots to move reliably from place to place. The job of a navigation stack is to produce a safe path for a robot to navigate, by processing data from odometry, sensors, and a map of the environment.

Dynamics (e.g., the velocity and acceleration of a robot) are essential for local path planners, including dynamic window approach (DWA) and time elastic band (TEB). In the ROS navigation stack, a local path planner inputs sensor and odometry messages and outputs velocity commands that control the robot's motion. In ROS navigation, translational and rotational velocity and acceleration are required. Translational velocity (m/s) is the velocity when a robot is moving in a straight line, and rotational velocity (rad/s) is equivalent to angular velocity.

Three parameters determine the quality of the planned global path: cost factor, neutral cost, and lethal cost. If cost factor is higher, cost values will have a plateau around obstacles and the planner will then treat (for example) the whole width of a narrow hallway as equally undesirable and thus will not plan paths down the center. Extreme neutral cost values have the same effect. For lethal cost, setting it to a low value may result in failure to produce any path, even when a feasible path is obvious.

In mobile robotics, global paths may be planned for a mobile robot using the A*, Dijkstra, or Voronoi algorithms or their variants. However, there is a need to improve on conventional ill-defined paths for robot motion.

The document COLE KENAN ET AL: "Reactive Trajectory Generation for Multiple Vehicles in Unknown Environments With Wind Disturbances", XP011690922 shows a method for determining a path based on a segmented trajectory. The smoothness for the individual segments is taken into account for determining the path.

The document MARTINEZ-ALFARO H ET AL: "Collision-free path planning for mobile robots and/or AGVs using simulated annealing", XP010138896 shows a method for determining optimal paths for autonomous vehicles. Especially, the use of segmented paths is shown there.

The document US 9,804,603 B1 shows a curved path approximation in vehicle guidance systems and according methods. Especially, also the use of segmented paths is shown.

The document Rairan Jose Danilo: "Robot path optimization based on a reference model and sigmoid functions", XP093121376 shows a path optimization using sigmoid segments based upon route length and obstacles avoidance.

### SUMMARY

The present invention is defined by the independent claims. The dependent claims shows further advantageous developments.

In accordance with an aspect of the present invention, global paths are planned using piecewise Sigmoid curves by determining an initial valid path for guiding a robot from a starting position to an ending position, dividing the initial valid path into a plurality of individual segments of the initial valid path, and fitting a separate Sigmoid curve respectively to each of the plurality of individual segments of the initial valid path based on parameters of at least one of smoothness and security to produce a piecewise Sigmoid curve path. By planning global paths in this manner, a robot navigating along the piecewise Sigmoid curve path may move continuously, smoothly, and with a reduced amount of starting and stopping of the onboard motors while avoiding and maintaining distance from obstacles in the environment.

This aspect may also include the method performed by the computer executing the instructions of the computer program, and an apparatus that performs the method.

The summary clause does not necessarily describe all necessary features of the embodiments of the present invention. The present invention may also be a sub-combination of the features described above.

### BRIEF DESCRIPTION OF THE DRAWINGS

FIG. 1 shows an exemplary hardware configuration for global path planning using piecewise sigmoid curves, according to an embodiment of the present invention.

FIG. 2 shows an exemplary method for global path planning using piecewise sigmoid curves, according to an embodiment of the present invention.

FIG. 3 shows an exemplary method of fitting Sigmoid curves to individual segments of an initial valid path to produce a piecewise Sigmoid curve path, according to an embodiment of the present invention.

FIG. 4 shows a map of an environment subjected to global path planning using piecewise sigmoid curves, according to an embodiment of the present invention.

FIG. 5 shows a path of piecewise sigmoid curves, according to an embodiment of the present invention.

FIG. 6 shows an example of a Sigmoid curve based on a Gompertz function, according to an embodiment of the present invention.

FIG. 7 shows a path of piecewise sigmoid curves illustrating a curve height adjustment, according to an embodiment of the present invention.

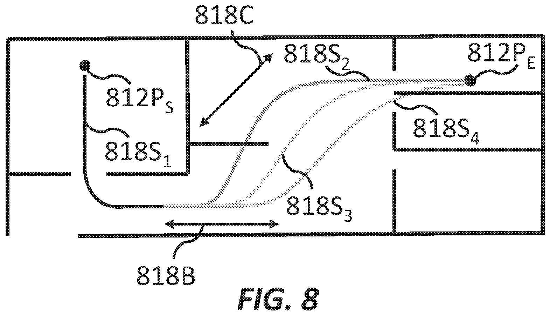

FIG. 8 shows a path of piecewise sigmoid curves illustrating curve starting point and curve sharpness adjustments, according to an embodiment of the present invention.

## DETAILED DESCRIPTION OF ILLUSTRATIVE EMBODIMENTS

To plan a global path, robot motion control with well-defined, smooth, continuous, and non-stop paths may be obtained such that the robot can navigate from the start point to goal point in a smooth and continuous motion. The well-defined, smooth, continuous, and non-stop path may be acquired using piecewise well-defined mathematical shapes, such as Sigmoid curves, that allow a robot to navigate from goal point to start point in a single, smooth and continuous motion.

In mobile robotics, global paths may be planned for a mobile robot using the A*, Dijkstra, or Voronoi algorithms or their variants. However, all of these algorithms give paths that are either non-smooth or ill-defined paths, or paths that hug obstacles. Such non-optimal paths may lead to several other problems, such as (1) unnecessary stop-and-re-plan behavior which may result in robot motion that becomes non-continuous, (2) the robot opts not to navigate through a narrow area whereas in fact it is capable of doing so, i.e., the robot gets stuck, or (3) higher likelihood of obstacle collision since the robot may drift while following a path that hugs an obstacle, thus again leading to stop-and-re-plan behavior which may result in robot motion that becomes non-continuous.

The A* star path planning algorithm returns the shortest possible path from the goal point to destination point. Since it is the shortest path, the path hugs the environment and passes very close to obstacles in the environment (i.e., results in "hugging"). To prevent hugging, an inflation layer may be used as a workaround using an *inflation radius,* which increases the size of obstacles in the environment so that the robot does not hug as close to the environment. However, inflation layering may make a robot think a passageway is too narrow to pass through, whereas in fact the robot can pass through. Thus, inflation layer use may create a problem of the robot getting stuck in a narrow area when it is actually capable of passing through. In other words, since the inflation radius increases the size of obstacles in the environment, a narrow zone which the robot can otherwise pass safely through appears too narrow for the robot to pass through due to the inflation radius. Thus, the robot stops.

The A* star algorithm uses grids for planning. The coarser the grid, the less smooth the path is, thus paths that are not smooth are generated. Finer grids can be used to smooth such paths to a certain extent, but this may increase processing time. In addition, since the A* star algorithm gives the shortest possible path, the path may not be mathematically definable.

Using Dijkstra, paths may also not be well defined or smooth since Dijkstra paths are similar to A* paths in that A* is a special variant of Dijkstra.

The embodiments herein may provide improved and refined robot motion along a global path using a piecewise Sigmoid curve path based on an initial valid path returned by a planner, resulting in a smoother generated path. The resulting path may be well-defined, continuous and smooth, resulting in smooth and continuous robot motion while maximizing secure cost, establishing secure clearance of obstacles.

Embodiments herein may also provide adjustment that is much easier than ROS navigation stack systems. Also, as distances from obstacles in an environment are maximized, a robot may navigate continuously without any stop and go behavior.

Embodiments herein may avoid problems with A*, Dijkstra, or Voronoi path planning, such as ill-defined paths that are not smooth, hugging to obstacles leading to a greater likelihood of stop and re-plan behavior, and/or getting stuck. Individual Sigmoid curves may be best fit to individual segments of an initial valid path based on smoothness and security.

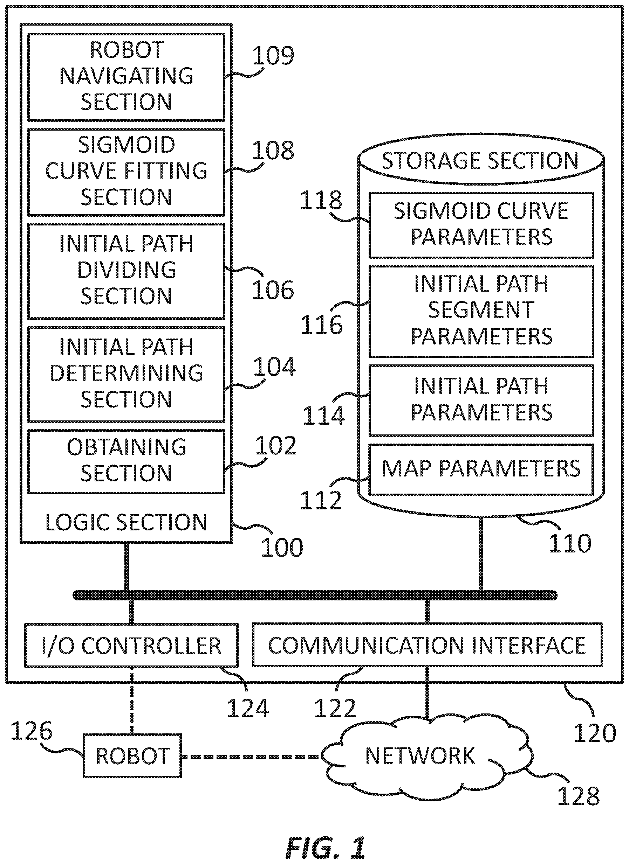

FIG. 1 shows an exemplary hardware configuration for global path planning using piecewise sigmoid curves, according to an embodiment of the present invention. The exemplary hardware configuration includes global path planning device 120, which communicates with network 128, and interacts with robot 126. Global path planning device 120 may be a host computer, such as a server computer or a mainframe computer that executes an on-premise application and hosts client computers that use it, in which case global path planning device 120 may not be directly connected to robot 126, but are connected through network 128. Global path planning device 120 may be a computer system that includes two or more computers. Global path planning device 120 may be a personal computer or a robot computer, such as a computer mounted on a robot, that executes an application for a user of global path planning device 120.

Global path planning device 120 includes a logic section 100, a storage section 110, a communication interface 122, and an input/output controller 124. Logic section 100 may be a computer program product including one or more computer readable storage mediums collectively storing program instructions that are executable by a processor or programmable circuitry to cause the processor or programmable circuitry to perform the operations of the various sections. Logic section 100 may alternatively be analog or digital programmable circuitry, or any combination thereof. Logic section 100 may be composed of physically separated storage or circuitry that interacts through communication. Storage section 110 may be a non-volatile computer-readable medium capable of storing non-executable data for access by logic section 100 during performance of the processes herein. Communication interface 122 reads transmission data, which may be stored on a transmission buffering region provided in a recording medium, such as storage section 110, and transmits the read transmission data to network 128 or writes reception data received from network 128 to a reception buffering region provided on the recording medium. Input/output controller 124 connects to various input and output units, such as those on robot 126, via a parallel port, a serial port, a keyboard port, a mouse port, a monitor port, and the like to accept commands and present information.

Output devices on robot 126 may include a display device, speaker, etc. Input devices on robot 126 may include a mouse, keyboard, etc. for receiving human input, and may also be a sensor for detecting various types of sensory data using cameras, accelerometers, GPS, etc. Such sensors may be mounted onto robot 126 that includes global path planning device 120, mounted onto another robot dedicated to environment mapping, mounted onto a structure that is static with respect to an environment that is the subject of mapping, or any combination.

Logic section 100 includes obtaining section 102, initial path determining section 104, initial path dividing section 106, and sigmoid curve fitting section 108. Storage section 110 includes map parameters 112, initial path parameters 114, initial path segment parameters 116, and sigmoid curve parameters 118.

Obtaining section 102 is the portion of logic section 100 that performs obtaining data from robot 126 and network 128, in the course of global path planning using sigmoid curves. Obtaining section 102 may store the data, such as map parameters 112, in storage section 110. Obtaining section 102 may include sub-sections for performing additional functions, as described in the flow charts below. Such sub-sections may be referred to by a name associated with their function.

Initial path determining section 104 is the portion of logic section 100 that determines initial valid paths in the course of global path planning using sigmoid curves. In doing so, initial path determining section 104 may process map parameters 112 to produce an initial valid path. Initial path determining section 104 may determine one or more initial valid paths for a given environment. Initial path determining section 104 may store each initial valid path in storage section 110 as initial path parameters 114. Initial path determining section 104 may include sub-sections for performing additional functions, as described in the flow charts below. Such sub-sections may be referred to by a name associated with their function.

Initial path dividing section 106 is the portion of logic section 100 that divides the initial valid path into a plurality of individual segments of the initial valid path. In doing so, initial path dividing section 106 may refer to initial path parameters 114, and store initial path segment parameters 116 in storage section 110. Initial path dividing section 106 may include sub-sections for performing additional functions, as described in the flow charts below. Such sub-sections may be referred to by a name associated with their function.

Sigmoid curve fitting section 108 is the portion of logic section 100 that fits a separate Sigmoid curve respectively to each of the plurality of individual segments of the initial valid path based on parameters of at least one of best smoothness and best security to produce a piecewise Sigmoid curve path. In doing so, sigmoid curve fitting section 108 may refer to initial path segment parameters 116, and store sigmoid curve parameters 118 in storage section 110. Sigmoid curve fitting section 108 may include sub-sections for performing additional functions, as described in the flow charts below. Such sub-sections may be referred to by a name associated with their function.

Robot navigating section 109 is the portion of logic section 100 that navigates a robot along the piecewise Sigmoid curve path. In doing so, robot navigating section 109 may refer to Sigmoid curve parameters 118, and operate motors of robot 126 accordingly. Robot navigating section 109 may include sub-sections for performing additional functions, as described in the flow charts below. Such sub-sections may be referred to by a name associated with their function.

In other embodiments, the global path planning device may be any other device capable of processing logical functions in order to perform the processes herein. The traffic flow inference device may not need to be connected to a network in environments where the input, output, and all information is directly connected. The logic section and the storage section need not be entirely separate devices, but may share one or more computer-readable mediums. For example, the storage section may be a hard drive storing both the computer-executable instructions and the data accessed by the logic section, and the logic section may be a combination of a central processing unit (CPU) and random access memory (RAM), in which the computer-executable instructions may be copied in whole or in part for execution by the CPU during performance of the processes herein.

In embodiments where the global path planning device is a computer, a program that is installed in the computer can cause the computer to function as or perform operations associated with apparatuses of the embodiments of the present invention or one or more sections (including modules, components, elements, etc.) thereof, and/or cause the computer to perform processes of the embodiments of the present invention or steps thereof. Such a program may be executed by a processor to cause the computer to perform certain operations associated with some or all of the blocks of flowcharts and block diagrams described herein.

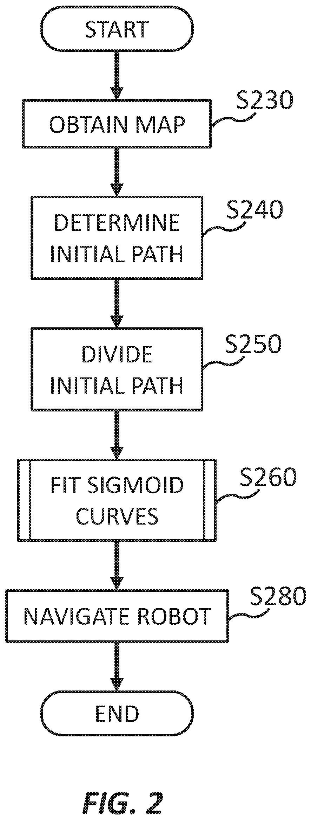

FIG. 2 shows an exemplary method for global path planning using piecewise sigmoid curves, according to an embodiment of the present invention. The operational flow may provide a method of global path planning using piecewise sigmoid curves.

At S230, an obtaining section, such as obtaining section 102, obtains a map of an environment including a starting position, an ending position, and at least one obstacle between the starting position and the ending position. The map may be compiled from sensory data from observing an environment and capturing sensory data thereof. The sensory data may include images, video, spatial data, etc. The obtaining section may obtain the map directly from a robot, such as robot 126, or through a network to which the input device is connected. The obtaining section may store the map as map parameters, such as map parameters 112, within storage section 110.

At S240, an initial path determining section, such as initial path determining section 104, determines an initial valid path for guiding a robot from the starting position to the ending position. The initial valid path may be acquired using a global path planner algorithm, such as A\*, Dijkstra, etc., to search for and acquire an initial valid path, e.g., a shortest possible path, and form a search area based on an extension of the initial path. The obtaining section may store the initial valid path as initial path parameters, such as initial path parameters 114, within storage section 110.

At S250, an initial path dividing section, such as initial path dividing section 106, divides the initial valid path into a plurality of individual segments of the initial valid path. For example, the path may be divided based on the number and location of obstacles in the environment between the starting point and the ending point. The obtaining section may store the individual segments as initial path segment parameters, such as initial path segment parameters 116, within storage section 110.

At S260, a Sigmoid curve fitting section, such as Sigmoid curve fitting section 108, fits a separate Sigmoid curve respectively to each of the plurality of individual segments of the initial valid path based on parameters of at least one of smoothness and security to produce a piecewise Sigmoid curve path. A smoothness parameter may relate to the ability of a robot navigating along the Sigmoid curve to move continuously and reduce the starting and stopping of the onboard motors. A security parameter may relate to the ability of a robot navigating along the Sigmoid curve to avoid and maintain distance from obstacles in the environment. The piecewise Sigmoid curve path is piece-wise fit such that the initial point and direction of each subsequent Sigmoid curve coincides with the final point and direction of each previous Sigmoid curve.

At S280, a robot navigating section, such as robot navigating section 109, navigates a robot along the piecewise Sigmoid curve path. For example, robot navigating section operates motors of a robot, such as robot 126, to navigate the robot along the piecewise Sigmoid curve path. While navigating, robot navigating section may refer to sensory data in order to verify that the robot is navigating along the Sigmoid wise curve.

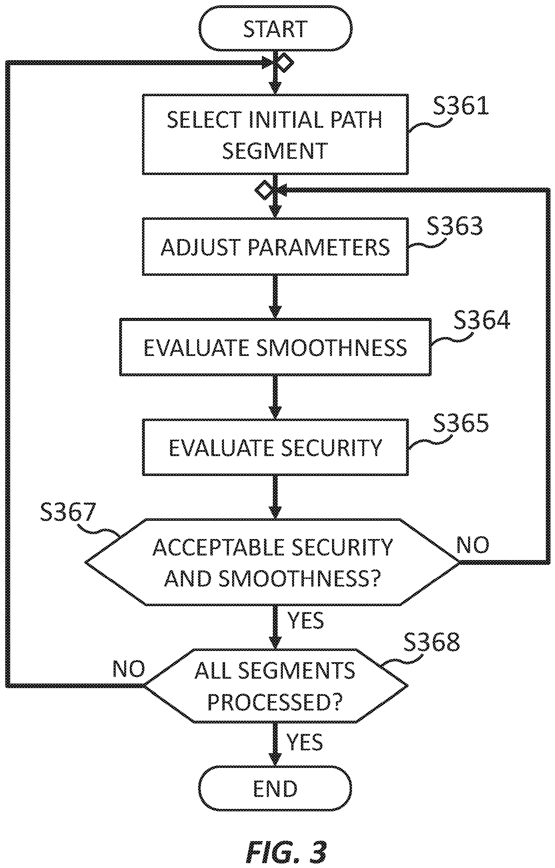

FIG. 3 shows an exemplary method of fitting Sigmoid curves to individual segments of an initial valid path to produce a piecewise Sigmoid curve path, according to an embodiment of the present invention. The operations within this operational flow may be performed by a Sigmoid curve fitting section, such as Sigmoid curve fitting section 108, or a correspondingly named sub-section thereof.

At S361, an initial path segment selecting section, such as Sigmoid curve fitting section 108 or a sub-section thereof, selects an initial path segment among the initial path segments. As iterations of the operational flow for global path planning proceed, only previously unselected initial path segments may be selected at S361, to ensure that each initial path segment is processed. For example, initial path segment selecting section may select the initial path segments in order from the starting position to the ending position.

At S363, a parameter adjusting section, such as Sigmoid curve fitting section 108 or a sub-section thereof, adjusts at least one of a curve height parameter, a curve start position parameter, a curve sharpness parameter, and a length parameter of a Sigmoid curve occupying the space of the selected initial path segment.

A desired path may be defined as a combination of several sigmoid curves,

$$path = \sum_{i=1}^{n} S(t_i^{start}, a_i, b_i, c_i, t_i^{end}) \qquad \text{EQ. 1}$$

where adjacent curves are connected and subject to the following constraints

$$t_1^{start} = x^{start}, t_n^{end} = x^{end}, t_{i+1}^{start} = t_i^{end} \qquad \text{EQ. 2}$$

where $t^{start}$ and $t^{end}$ are the boundaries of a sigmoid curve $i$, and $x^{start}$ and $x^{end}$ are the positions that a piecewise Sigmoid curve path including $n$ Sigmoid curves begins and ends.

At S364, a smoothness evaluating section, such as Sigmoid curve fitting section 108 or a sub-section thereof, evaluates a smoothness of the Sigmoid curve occupying the space of the selected initial path segment. For example, the smoothness evaluating section may evaluate the ability of a robot navigating along the Sigmoid curve to move continuously and the amount of starting and stopping of the onboard motors. A smooth term ($J_{smooth}$) may be realized by setting limitation to the maximal slope of the path function, that is

$$\max\left(\frac{d_{path(i)}}{dt}\right) \leq C_i \qquad \text{EQ. 3}$$

where $d_{path(i)}/dt$ is the slope of the path and $C_i$ is the desired maximum slope.

At S365, a security evaluating section, such as Sigmoid curve fitting section 108 or a sub-section thereof, evaluates a security of the Sigmoid curve occupying the space of the selected initial path segment. For example, the security evaluating section may evaluate ability of a robot navigating along the Sigmoid curve to avoid and maintain distance from obstacles in the environment. A secure term ($J_{secure}$) may be realized by setting limitation to the distance difference between the left obstacle clearance and the right obstacle clearance, defined as

$$J_{secure} = -\sum_{j=1}^{k}\left|d_j - 2 * path(j)\right| \qquad \text{EQ. 4}$$

where $d_j$ is the total available clearance of an obstacle $j$, and $path(j)$ is the distance of the path from the obstacle, for each of obstacles 1 through $k$.

At S368, a Sigmoid curve fitting section, such as Sigmoid curve fitting section 108 or a sub-section thereof, determines whether the selected initial path segment has an acceptable security and smoothness, based on the evaluations at S364 and S365. To find the best-fit Sigmoid curve, a 'cost' function may be applied. A 'cost' function $J$ may then be maximized and applied within a search area around an initial valid path segment to obtain parameters of an improved path. The cost function $J$ is defined as:

$$J = J_{smooth} + J_{secure} \qquad \text{EQ. 5}$$

If the selected initial path segment has an acceptable security and smoothness, then the operational flow proceeds to S368. If the selected initial path segment has an acceptable security and smoothness, then the operational flow returns to S363, to re-adjust at least one of a curve height parameter, a curve start position parameter, a curve sharpness parameter, and a length parameter of a Sigmoid curve occupying the space of the selected initial path segment. As iterations of S363 to S365 of the operational flow proceed, each Sigmoid curve may be adjusted based on these terms to arrive at a final smooth and secure global path.

At S368, a Sigmoid curve fitting section, such as Sigmoid curve fitting section 108 or a sub-section thereof, determines whether all of initial path segments have been processed by the Sigmoid curve fitting section. If any initial path segments remain unprocessed, then the operational flow returns to S361, where initial path segment is selected for processing. If no initial path segments remain unprocessed, then the operational flow ends.

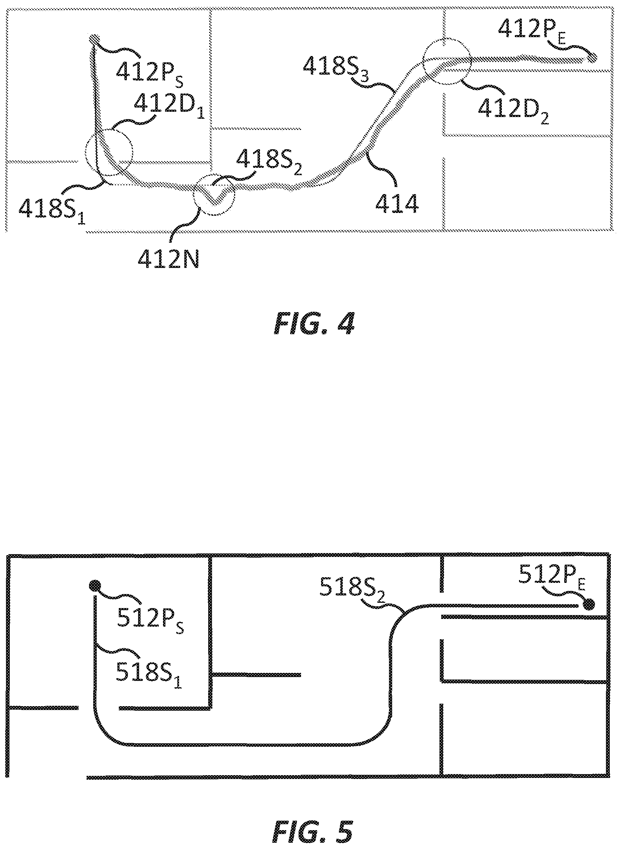

FIG. 4 shows a map of an environment subjected to global path planning using piecewise sigmoid curves, according to an embodiment of the present invention. A piecewise Sigmoid curve path includes three Sigmoid curves $418S_1$, $418S_2$, and $418S_3$ defining a single, smooth, and continuous path from starting position 412Ps to ending position $412P_E$.

In particular, as shown in FIG. 4, an initial valid path 414 was acquired using a global path planner algorithm, such as A*, Dijkstra, etc., to search for and determine an initial valid path, e.g., a shortest possible path, and form a search area based on an extension of the initial path. Along the path from starting position 412Ps to ending position $412P_E$, obstacles,

such as doorway $412D_1$, narrow hallway 412N, and doorway $412D_2$ are encountered.

For this environment, initial valid path 414 was prepared for piece-wise fitting by dividing the unsmooth, initial valid path into individual segments, such that the individual segments could be joined at midpoints between the obstacles (e.g., midway between doorway $412D_1$, narrow hallway 412N, and doorway $412D_2$). More specifically, initial valid path 414 was divided into three segments. A first segment of initial valid path 414 includes a Sigmoid curve fit through doorway $412D_1$. A second segment of initial valid path 414 includes a Sigmoid curve fit through narrow hallway 412N, and a third segment of initial valid path 414 includes a Sigmoid curve fit through a central region and doorway $412D_2$.

Each of the Sigmoid curves $418S_1$, $418S_2$, and $418S_3$ were adjusted to an acceptable level of security and smoothness. Due to the adjustments, Sigmoid curve $418S_1$ has increased clearance through doorway $412D_1$ without sacrificing smoothness; Sigmoid curve $418S_2$ has increased smoothness through narrow hallway 412N while avoiding unnecessary security; and Sigmoid curve $418S_3$ has increased clearance through doorway $412D_2$ without sacrificing smoothness.

FIG. 5 shows a comparative example of a path of piecewise Sigmoid curves, according to an embodiment of the present invention. In FIG. 5, only two Sigmoid curves, $518S_1$ and $518S_2$ form the global path from starting position 512Ps to ending position $512P_E$. In comparing the piecewise Sigmoid curve paths in FIG. 4 and FIG. 5, note how the path shown in the central region of FIG. 5 appears sub-optimal. For example, a person walking the path would have taken a straighter path to the doorway in the upper right corner of FIG. 5. This could be due to sub-optimal selection of the number of Sigmoid curves, sub-optimal dividing of the initial valid path, or perhaps starting without an initial valid path. Without use of the initial valid path prior to fitting Sigmoid curves, the path through the central region of FIG. 5 becomes extended and unnatural, leading to sub-optimal smoothness.

After the initial valid path was determined and divided into segments, the individual segments of the initial valid path were then piece-wise fit into a well-defined mathematical shape, such as Sigmoid curves. A Sigmoid curve is, generally speaking, a mathematically-defined 'S' shaped curve that may extend out to be a straight line at one extreme, and be a step-shape with rounded corners at the other extreme.

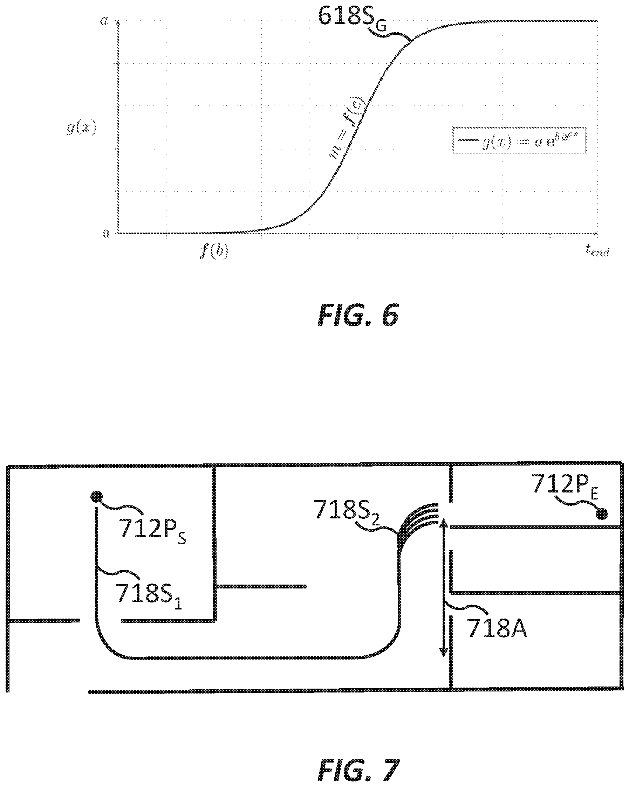

FIG. 6 shows an example of a Sigmoid curve based on a Gompertz function, according to an embodiment of the present invention. A Gompertz Sigmoid curve, is a well-defined mathematical function. In non-parametric form, the Gompertz Sigmoid curve is represented as:

$$g(x) = ae^{be^{cx}} \qquad \text{EQ. 6}$$

and in parametric form, the Gompertz Sigmoid curve is represented as:

$$\hat{g}(t) = \langle t, ae^{be^{ct}} \rangle \qquad \text{EQ. 7}$$

The parameters $a$, $b$, c and $t\_end$ are adjusted to fit a Gompertz function to each of the individual segments of the initial valid path. The parameters ($a$, $b$, $c$, $t\_end$) of each Gompertz function are adjusted during global path planning to maximize clearances from obstacles of a given individual segment of an initial valid path, and to increase smoothness.

In the Gompertz Sigmoid curve, $a$ defines the height of a curve [a > 0], $b$ defines the position at which the curve is started [b < 0], c defines the sharpness of the curve (i.e. sharp turn or smooth turn ) [c < 0], and $t\_end$, which appears in the parametric form of the equation, defines the length of the curve.

In addition to the Gompertz Sigmoid curve, any type of Sigmoid curve can be used as well in the same way. Parameters $a$, $b$, and $c$ can be added to the general equations of other Sigmoid curves to obtain similar behavior. The parameters $a$, $b$, and $c$ can be adjusted to optimize a piecewise Sigmoid curve path. For instance, the Sigmoid curve may be a Logistic function:

$$f(x) = \frac{1}{1+e^{-x}}, \qquad \text{EQ. 8}$$

a Hyperbolic tangent:

$$f(x) = \tanh x = \frac{e^x - e^{-x}}{e^x + e^{-x}},$$

EQ. 9

an Arctangent function:

$$f(x) = \arctan x,$$

EQ. 10

a Gudermannian function:

$$f(x) = \text{gd}(x) = \int_0^x \frac{1}{\cosh t} dt = 2\tanh(\arctan\left(\frac{x}{2}\right)),$$

EQ. 11

an Error function:

$$f(x) = \text{erf}(x) = \frac{2}{\sqrt{\pi}} \int_0^x e^{-t^2} dt,$$

EQ. 12

a Generalized logistic function:

$$f(x) = (1 + e^{-x})^{-\alpha}, \alpha > 0,$$

EQ. 13

a Smoothstep function:

$$f(x) = \begin{cases} \frac{\int_0^x (1-u^2)^N du}{\int_0^1 (1-u^2)^N du}, & |x| \leq 1 \\ \text{sgn}(x), & |x| \leq 1 \end{cases} N \geq 1,$$

EQ. 14

or even an Algebraic function:

$$f(x) = \frac{x}{\sqrt{1+x^2}}.$$

EQ. 15

For instance, consider a Logistic function Sigmoid curve. By introducing parameters *a, b,* and c to the Logistic function, the Logistic function equation becomes:

$$f(x) = a\frac{1}{1+be^{-cx}},$$

EQ. 16

In this way, adjustment of the Logistic function equation behaves just like adjustment of the Gompertz Sigmoid curve, and thus can be adjusted in the same way. As another example, by introducing the *a, b,* and *c* parameters into the Arctangent function results in the following equation:

$$f(x) = a \arctan(b^{cx}).\qquad\qquad \text{EQ. 17}$$

Other Sigmoid curve functions can be made similarly adjustable by introducing *a, b,* and *c* parameters appropriately. For completeness, it should be understood that a Gompertz Sigmoid curve and other Sigmoid curve functions can also be used to represent straight lines so that it can be used for generating straight line paths for a robot simply by setting parameter c to be zero.

For example, while processes or blocks are presented in a given order, alternative embodiments may perform routines having operations, or employ systems having blocks, in a different order, and some processes or blocks may be deleted, moved, added, subdivided, combined, and/or modified. While processes or blocks are at times shown as being performed in series, these processes or blocks may instead be performed in parallel, or may be performed at different times. Further, any specific numbers noted herein are only examples; alternative implementations may employ differing values or ranges.

Unless the context clearly requires otherwise, throughout the description and the claims, references are made herein to routines, subroutines, and modules. Generally it should be understood that a routine is a software program executed by computer hardware and that a subroutine is a software program executed within another routine. However, routines discussed herein may be executed within another routine and subroutines may be executed independently, i.e., routines may be subroutines and vice versa. As used herein, the term "module" (or "logic") may refer to, be part of, or include an Application Specific Integrated Circuit (ASIC), a System on a Chip (SoC), an electronic circuit, a programmed programmable circuit (such as, Field Programmable Gate Array (FPGA)), a processor (shared, dedicated, or group) and/or memory (shared, dedicated, or group) or in another computer hardware component or device that execute one or more software or firmware programs or routines having executable machine instructions (generated from an assembler and/or a compiler) or a combination, a combinational logic circuit, and/or other suitable components with logic that provide the described functionality. Modules may be distinct and independent components integrated by sharing or passing data, or the modules may be subcomponents of a single module, or be split among several modules. The components may be processes running on, or implemented on, a single computer, processor or controller node or distributed among a plurality of computer, processor or controller nodes running in parallel, concurrently, sequentially or a combination.

Various embodiments of the present invention may be described with reference to flowcharts and block diagrams whose blocks may represent (1) steps of processes in which operations are performed or (2) sections of apparatuses responsible for performing operations. Certain steps and sections may be implemented by dedicated circuitry, programmable circuitry supplied with computer-readable instructions stored on computer-readable media, and/or processors supplied with computer-readable instructions stored on computer-readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), etc.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

## Claims

1.  A method comprising:

    determining (S240) an initial valid path for guiding a robot from a starting position to an ending position;
    dividing (S250) the initial valid path into a plurality of individual segments of the initial valid path; and
    fitting (S260) a separate Sigmoid curve respectively to each of the plurality of individual segments of the initial valid path based on parameters of at least one of smoothness and security to produce a piecewise Sigmoid curve path,

    wherein the determining (S240) the initial valid path includes applying one of an A* algorithm and a Dijkstra algorithm between the starting position and the ending position.

2.  The method of Claim 1, wherein:
    the fitting (S260) includes adjusting a curve height parameter, a curve start position parameter, a curve sharpness parameter, or a length parameter of each Sigmoid curve.

3. The method of Claim 2, wherein:
the adjusting includes adjusting the parameters according to one of a Gompertz function, a logistic function, a hyperbolic tangent function, an arctangent function, a hyperbolic tangent function, an arctangent function, a Gudermannian function, an error function, a generalized logistic function, a smoothstep function, and an algebraic function.

4. The method of any of Claims 1-3, further comprising:
navigating (S280) a robot along the piecewise Sigmoid curve path.

5. The method of any of Claims 1-4, further comprising:
obtaining (S230) a map of an environment including the starting position, the ending position, and at least one obstacle between the starting position and the ending position.

6. A computer program that is executable by a computer to cause the computer to perform operations comprising:

   determining (S240) an initial valid path for guiding a robot from a starting position to an ending position;
   dividing (S250) the initial valid path into a plurality of individual segments of the initial valid path; and
   fitting (S260) a separate Sigmoid curve respectively to each of the plurality of individual segments of the initial valid path based on parameters of at least one of smoothness and security to produce a piecewise Sigmoid curve path,

   wherein the determining (S240) the initial valid path includes applying one of an A* algorithm and a Dijkstra algorithm between the starting position and the ending position.

7. The computer program of Claim 6, wherein:
the fitting (S260) includes adjusting a curve height parameter, a curve start position parameter, a curve sharpness parameter, or a length parameter of each Sigmoid curve.

8. The computer program of Claim 7, wherein:
the adjusting includes adjusting the parameters according to one of a Gompertz function, a logistic function, a hyperbolic tangent function, an arctangent function, a hyperbolic tangent function, an arctangent function, a Gudermannian function, an error function, a generalized logistic function, a smoothstep function, and an algebraic function.

9. The computer program of any of Claims 6-8, further comprising:
navigating (S280) a robot along the piecewise Sigmoid curve path.

10. The computer program of any of Claims 6-9, further comprising:
obtaining (S230) a map of an environment including the starting position, the ending position, and at least one obstacle between the starting position and the ending position.

11. An apparatus (120) comprising:

   an initial path determining section (104) configured to determine an initial valid path for guiding a robot from a starting position to an ending position;
   an initial path dividing section (106) configured to divide the initial valid path into a plurality of individual segments of the initial valid path; and
   a Sigmoid curve fitting section (108) configured to fit a separate Sigmoid curve respectively to each of the plurality of individual segments of the initial valid path based on parameters of at least one of smoothness and security to produce a piecewise Sigmoid curve path,

   wherein the initial valid path determining section (104) applies one of an A* algorithm and a Dijkstra algorithm between the starting position and the ending position.

12. The apparatus of Claim 11, wherein:
the Sigmoid curve fitting section (108) includes an adjusting section configured to adjust a curve height parameter, a curve start position parameter, a curve sharpness parameter, or a length parameter of each Sigmoid curve.

13. The apparatus of Claim 12, wherein:
the adjusting section is further configured to adjust the parameters according to one of a Gompertz function, a logistic function, a hyperbolic tangent function, an arctangent function, a hyperbolic tangent function, an arctangent function, a Gudermannian function, an error function, a generalized logistic function, a smoothstep function, and an algebraic function.

14. The apparatus of any of Claims 11-13, further comprising:
a robot navigating section (109) configured to navigate a robot along the piecewise Sigmoid curve path.

15. The apparatus of any of Claims 11-14, further comprising:
an obtaining section configured to obtain a map of an environment including the starting position, the ending position, and at least one obstacle between the starting position and the ending position.

## Patentansprüche

1. Verfahren, umfassend:

Bestimmen (S240) einer anfänglichen gültigen Bahn, um einen Roboter von einer startenden Position zu einer endenden Position zu führen;
Aufteilen (S250) der anfänglichen gültigen Bahn in eine Vielzahl von individuellen Segmenten der anfänglichen gültigen Bahn; und
Anpassen (S260) einer separaten Sigmoid-Kurve jeweils an jede der Vielzahl von individuellen Segmenten der anfänglichen gültigen Bahn, basierend auf Parametern von mindestens einem von Glätte und Sicherheit, um eine stückweise Sigmoid-Kurvenbahn herzustellen,
wobei das Bestimmen (S240) der anfänglichen gültigen Bahn Anwenden eines von einem A*-Algorithmus und einem Dijkstra-Algorithmus zwischen der startenden Position und der endenden Position beinhaltet.

2. Verfahren gemäß Anspruch 1, wobei:
das Anpassen (S260) Einstellen eines Kurvenhöhenparameters, eines Kurvenstartpositionsparameters, eines Kurvenschärfeparameters oder eines Längenparameters jeder Sigmoid-Kurve beinhaltet.

3. Verfahren gemäß Anspruch 2, wobei:
das Einstellen Einstellen der Parameter gemäß einer von einer Gompertz-Funktion, einer logistischen Funktion, einer hyperbolischen Tangensfunktion, einer Arkustangensfunktion, einer hyperbolischen Tangensfunktion, einer Arkustangensfunktion, einer Gudermannfunktion, einer Fehlerfunktion, einer verallgemeinerten logistischen Funktion, einer Smoothstep-Funktion und einer algebraischen Funktion beinhaltet.

4. Verfahren gemäß einem der Ansprüche 1-3, ferner umfassend:
Navigieren (S280) eines Roboters entlang der stückweisen Sigmoid-Kurvenbahn.

5. Verfahren gemäß einem der Ansprüche 1-4, ferner umfassend:
Erlangen (S230) einer Karte einer Umgebung, die die startende Position, die endende Position und mindestens ein Hindernis zwischen der startenden Position und der endenden Position beinhaltet.

6. Computerprogramm, das durch einen Computer ausführbar ist, um den Computer zu veranlassen, Operationen durchzuführen, umfassend:

Bestimmen (S240) einer anfänglichen gültigen Bahn, um einen Roboter von einer startenden Position zu einer endenden Position zu führen;
Aufteilen (S250) der anfänglichen gültigen Bahn in eine Vielzahl von individuellen Segmenten der anfänglichen gültigen Bahn; und
Anpassen (S260) einer separaten Sigmoid-Kurve jeweils an jede der Vielzahl von individuellen Segmenten der anfänglichen gültigen Bahn, basierend auf Parametern von mindestens einem von Glätte und Sicherheit, um eine stückweise Sigmoid-Kurvenbahn herzustellen,
wobei das Bestimmen (S240) der anfänglichen gültigen Bahn Anwenden eines von einem A*-Algorithmus und einem Dijkstra-Algorithmus zwischen der startenden Position und der endenden Position beinhaltet.

7. Computerprogramm gemäß Anspruch 6, wobei:
das Anpassen (S260) Einstellen eines Kurvenhöhenparameters, eines Kurvenstartpositionsparameters, eines Kurvenschärfeparameters oder eines Längenparameters jeder Sigmoid-Kurve beinhaltet.

8. Computerprogramm gemäß Anspruch 7, wobei:
das Einstellen Einstellen der Parameter gemäß einer von einer Gompertz-Funktion, einer logistischen Funktion, einer hyperbolischen Tangensfunktion, einer Arkustangensfunktion, einer hyperbolischen Tangensfunktion, einer Arkustangensfunktion, einer Gudermannfunktion, einer Fehlerfunktion, einer verallgemeinerten logistischen Funktion, einer Smoothstep-Funktion und einer algebraischen Funktion beinhaltet.

9. Computerprogramm gemäß einem der Ansprüche 6-8, ferner umfassend:
Navigieren (S280) eines Roboters entlang der stückweisen Sigmoid-Kurvenbahn.

10. Computerprogramm gemäß einem der Ansprüche 6-9, ferner umfassend:
Erlangen (S230) einer Karte einer Umgebung, die die startende Position, die endende Position und mindestens ein Hindernis zwischen der startenden Position und der endenden Position beinhaltet.

11. Gerät (120), umfassend:

einen Abschnitt (104) zum Bestimmen einer anfänglichen Bahn, der dazu konfiguriert ist, eine anfängliche gültige Bahn zu bestimmen, um einen Roboter von einer startenden Position zu einer endenden Position zu führen;
einen Abschnitt (106) zum Aufteilen der anfänglichen Bahn, der dazu konfiguriert ist, die anfängliche gültige Bahn in eine Vielzahl von individuellen Segmenten der anfänglichen gültigen Bahn aufzuteilen; und
einen Sigmoid-Kurven-Anpassungsabschnitt (108), der dazu konfiguriert ist, eine separate Sigmoid-Kurve jeweils an jede der Vielzahl von individuellen Segmenten der anfänglichen gültigen Bahn anzupassen, basierend auf Parametern von mindestens einem von Glätte und Sicherheit, um eine stückweise Sigmoid-Kurvenbahn herzustellen,
wobei der Abschnitt (104) zum Bestimmen einer anfänglichen Bahn eines von einem A*-Algorithmus und einem Dijkstra-Algorithmus zwischen der startenden Position und der endenden Position anwendet.

12. Gerät gemäß Anspruch 11, wobei:
der Sigmoid-Kurven-Anpassungsabschnitt (108) einen Einstellungsabschnitt beinhaltet, der dazu konfiguriert ist, einen Kurvenhöhenparameter, einen Kurvenstartpositionsparameter, einen Kurvenschärfeparameter oder einen Längenparameter jeder Sigmoid-Kurve einzustellen.

13. Gerät gemäß Anspruch 12, wobei:
der Einstellungsabschnitt ferner dazu konfiguriert ist, die Parameter gemäß einer von einer Gompertz-Funktion, einer logistischen Funktion, einer hyperbolischen Tangensfunktion, einer Arkustangensfunktion, einer hyperbolischen Tangensfunktion, einer Arkustangensfunktion, einer Gudermannfunktion, einer Fehlerfunktion, einer verallgemeinerten logistischen Funktion, einer Smoothstep-Funktion und einer algebraischen Funktion einzustellen.

14. Gerät gemäß einem der Ansprüche 11-13, ferner umfassend:
einen Roboter-Navigationsabschnitt (109), der dazu konfiguriert ist, einen Roboter entlang der stückweisen Sigmoid-Kurvenbahn zu navigieren.

15. Gerät gemäß einem der Ansprüche 11-14, ferner umfassend:
einen Erlangungsabschnitt, der dazu konfiguriert ist, eine Karte einer Umgebung zu erlangen, die die startende Position, die endende Position und mindestens ein Hindernis zwischen der startenden Position und der endenden Position beinhaltet.

**Revendications**

1. Procédé comprenant :

la détermination (S240) d'un trajet initial valide pour guider un robot d'une position de départ à une position d'arrivée ;

la division (S250) du trajet initial valide en une pluralité de segments individuels du trajet initial valide ; et

l'ajustement (S260) d'une courbe sigmoïde distincte respectivement à chacun de la pluralité de segments individuels du trajet initial valide sur la base de paramètres d'au moins un parmi la régularité et la sécurité pour produire un trajet de courbe sigmoïde par morceaux,

dans lequel la détermination (S240) du trajet initial valide comporte l'application d'un algorithme A* et d'un algorithme de Dijkstra entre la position de départ et la position d'arrivée.

2. Procédé selon la revendication 1, dans lequel :

l'ajustement (S260) comporte l'ajustement d'un paramètre de hauteur de courbe, d'un paramètre de position de départ de courbe, d'un paramètre de netteté de courbe ou d'un paramètre de longueur de chaque courbe sigmoïde.

3. Procédé selon la revendication 2, dans lequel :

l'ajustement comporte l'ajustement des paramètres selon l'une d'une fonction de Gompertz, d'une fonction logistique, d'une fonction tangente hyperbolique, d'une fonction arc tangente, d'une fonction tangente hyperbolique, d'une fonction arc tangente, d'une fonction Gudermannienne, d'une fonction d'erreur, d'une fonction logistique généralisée, d'une fonction smoothstep et d'une fonction algébrique.

4. Procédé selon l'une quelconque des revendications 1 à 3, comprenant également :

la navigation (S280) d'un robot le long du trajet de courbe sigmoïde par morceaux.

5. Procédé selon l'une quelconque des revendications 1 à 4, comprenant également :

l'obtention (S230) d'une carte d'un environnement comportant la position de départ, la position d'arrivée et au moins un obstacle entre la position de départ et la position d'arrivée.

6. Programme informatique exécutable par un ordinateur pour amener l'ordinateur à effectuer des opérations comprenant :

la détermination (S240) d'un trajet initial valide pour guider un robot d'une position de départ à une position d'arrivée ;

la division (S250) du trajet initial valide en une pluralité de segments individuels du trajet initial valide ; et

l'ajustement (S260) d'une courbe sigmoïde distincte respectivement à chacun de la pluralité de segments individuels du trajet initial valide sur la base de paramètres d'au moins un parmi la régularité et la sécurité pour produire un trajet de courbe sigmoïde par morceaux,

dans lequel la détermination (S240) du trajet initial valide comporte l'application d'un algorithme A* et d'un algorithme de Dijkstra entre la position de départ et la position d'arrivée.

7. Programme informatique selon la revendication 6, dans lequel :

l'ajustement (S260) comporte l'ajustement d'un paramètre de hauteur de courbe, d'un paramètre de position de départ de courbe, d'un paramètre de netteté de courbe ou d'un paramètre de longueur de chaque courbe sigmoïde.

8. Programme informatique selon la revendication 7, dans lequel :

l'ajustement comporte l'ajustement des paramètres selon l'une d'une fonction de Gompertz, d'une fonction logistique, d'une fonction tangente hyperbolique, d'une fonction arc tangente, d'une fonction tangente hyperbolique, d'une fonction arc tangente, d'une fonction Gudermannienne, d'une fonction d'erreur, d'une fonction logistique généralisée, d'une fonction smoothstep et d'une fonction algébrique.

9. Programme informatique selon l'une quelconque des revendications 6 à 8, comprenant également :

la navigation (S280) d'un robot le long du trajet de courbe sigmoïde par morceaux.

10. Programme informatique selon l'une quelconque des revendications 6 à 9, comprenant également :

l'obtention (S230) d'une carte d'un environnement comportant la position de départ, la position d'arrivée et au moins un obstacle entre la position de départ et la position d'arrivée.

11. Appareil (120) comprenant :

une section de détermination de trajet initial (104) configurée pour déterminer un trajet initial valide pour guider un robot d'une position de départ à une position d'arrivée ;

une section de division de trajet initial (106) configurée pour diviser le trajet initial valide en une pluralité de segments individuels du trajet initial valide ; et

une section d'ajustement de courbe sigmoïde (108) configurée pour ajuster une courbe sigmoïde distincte respectivement à chacun de la pluralité de segments individuels du trajet initial valide sur la base de paramètres d'au moins un parmi la régularité et la sécurité pour produire un trajet de courbe sigmoïde par morceaux, dans lequel la section de détermination de trajet initial valide (104) applique un algorithme A* et un algorithme de Dijkstra entre la position de départ et la position d'arrivée.

12. Appareil selon la revendication 11, dans lequel :
la section d'ajustement de courbe sigmoïde (108) comporte une section d'ajustement configurée pour ajuster un paramètre de hauteur de courbe, un paramètre de position de départ de courbe, un paramètre de netteté de courbe ou un paramètre de longueur de chaque courbe sigmoïde.

13. Appareil selon la revendication 12, dans lequel :
la section d'ajustement est également configurée pour ajuster les paramètres selon l'une d'une fonction de Gompertz, d'une fonction logistique, d'une fonction tangente hyperbolique, d'une fonction arc tangente, d'une fonction tangente hyperbolique, d'une fonction arc tangente, d'une fonction Gudermannienne, d'une fonction d'erreur, d'une fonction logistique généralisée, d'une fonction smoothstep et d'une fonction algébrique.

14. Appareil selon l'une quelconque des revendications 11 à 13, comprenant également :
une section de navigation de robot (109) configurée pour faire naviguer un robot le long du trajet de courbe sigmoïde par morceaux.

15. Appareil selon l'une quelconque des revendications 11 à 14, comprenant également :
une section d'obtention configurée pour obtenir une carte d'un environnement comportant la position de départ, la position d'arrivée et au moins un obstacle entre la position de départ et la position d'arrivée.

**FIG. 1**

START

OBTAIN MAP — S230

DETERMINE
INITIAL PATH — S240

DIVIDE
INITIAL PATH — S250

FIT SIGMOID
CURVES — S260

NAVIGATE ROBOT — S280

END

*FIG. 2*

START

SELECT INITIAL PATH SEGMENT — S361

ADJUST PARAMETERS — S363

EVALUATE SMOOTHNESS — S364

EVALUATE SECURITY — S365

S367 — ACCEPTABLE SECURITY AND SMOOTHNESS? — NO

YES

NO — ALL SEGMENTS PROCESSED? — S368

YES

END

*FIG. 3*

**FIG. 4**

**FIG. 5**

**FIG. 6**

**FIG. 7**

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 9804603 B1

**Non-patent literature cited in the description**

- **COLE KENAN et al.** Reactive Trajectory Generation for Multiple Vehicles in Unknown Environments With Wind Disturbances. *XP011690922*
- **MARTINEZ-ALFARO H et al.** Collision-free path planning for mobile robots and/or AGVs using simulated annealing. *XP010138896*
- **RAIRAN JOSE DANILO**. Robot path optimization based on a reference model and sigmoid functions. *XP093121376*